# FASCICULE DE BREVET EUROPEEN

(11) **EP 1 116 200 B1**
(45) Date de publication et mention de la délivrance du brevet: **21.05.2003**
(21) Numéro de dépôt: 99939488.5
(22) Date de dépôt: 20.08.1999
(51) Int. Cl.: G09F 19/12

(54) **LUMIERES ADDITIONNELLES AVANT ET ARRIERE A L'IMAGE**
ZUSATZLICHT VOR UND HINTER DEM BILD
ADDITIONAL REAR AND FRONT LIGHTS TO AN IMAGE

(30) Priorité: 24.08.1998 FR 9810740
(43) Date de publication de la demande: 18.07.2001
(73) Titulaire: Charbonneaux, Marc, 69004 Lyon Croix Rousse (FR); Perrichon, Claude Annie, 38080 L'Isle d'Abeau (FR); Piccaluga, Pierre, 38080 L'Isle d'Abeau (FR); Morchain, Patrice, 59400 Cambrai (FR)
(72) Inventeur: Charbonneaux, Marc, 69004 Lyon Croix Rousse (FR); Perrichon, Claude Annie, 38080 L'Isle d'Abeau (FR); Piccaluga, Pierre, 38080 L'Isle d'Abeau (FR); Morchain, Patrice, 59400 Cambrai (FR)
(74) Mandataire: Hirsch, Marc-Roger
(86) Numéro de dépôt international: FR9902025
(87) Numéro de publication internationale: WO00011640

(56) Documents cités:
- FR-A- 2 239 927
- US-A- 4 282 669
- US-A- 4 922 384
- US-A- 5 265 357
- US-A- 5 367 801
- US-A- 5 787 618

## Description

Il est habituel dans le monde de la vision de recréer sur photo ou sur écran des images qui sont des reproductions des scènes de la vie. Ces reproductions sont plus ou moins fidèles à l'image d'origine.

Ces présentations photographiques ou cinématographiques sont obtenues par projections lumineuses sur écran ou film sensibles. Les diapositives utilisent la lumière projetée en arrière de la diapositive, qui est filtrée par le film lui-même.Les écrans de télévision ou d'ordinateur utilisent un système de projection d'un tube électronique particulier en arrière de l'écran.

Les écrans sont plats ou courbés suivant les commodités ou les options techniques utilisées.
Dans tous les cas, les différents modes de représentation artificielle , les techniques utilisent soit la lumière ambiante ou artificielle sur le plan film en avent ou arrière du film ou du support photo ou écran. Plusieurs sources lumineuses pour les couleurs sont parfois utilisées, telles que les tubes, bleu vert rouge, dont les additions de couleurs permettent d'obtenir toutes les couleurs.

US-A-5 265 357 propose un cadre pour photographies bi-dimensionnelles ou tri-dimensionnelles. L'image est disposée sur un support incurvé; une source d'illumination est montée devant l'image.

US-A-5 787 618 divulgue un appareil d'affichage produisant une illusion 5 d'optique. Des images multiples sont affichées dans la surface intérieure de l'appareil, en créant une illusion d'optique; les images superposées paraissent s'étendre vers l'arrière sur une profondeur supérieure à celle de l'appareil. L'appareil est formé d'un miroir et d'un miroir semi-réfléchissant entre lesquels sont disposées des lampes et un objet.

US-A-4 922 384 propose un cadre, présentant une rangée de lumières scintillantes en pourtour, un miroir semi-réfléchissant, un miroir réfléchissant avec une ouverture pour recevoir un transparent et une lampe derrière le transparent Le transparent produit une image projetée sur le miroir semi-réfléchissant.

Le présent procédé et appareil se propose d'ajouter une autre dimension lumineuse, en plus de la lumière habituelle. En effet, une image éclairée par une incidence lumineuse frontale au plan du film comme sur la photo papier avec la lumière du jour ou une lumière ambiante augmente des contrastes inexistants, par l'effet polarisant du support. Dans le cas d'une projection d'image avec une lumière arrière, il y a aussi une polarisation chromatique due à la nature de l'écran supportant l'image. Les nuances des couleurs sont ainsi diminuées par le support où l'image est représentée. Le support est lui-même émetteur d'un rayonnement lumineux interagissant sur les couleurs de l' image du fait que toute matière réagit aux effets lumineux avec une incidence particulière sur une lumière projetée ou reçue . Le principe de la photographie sur film sensible et de la thermographie en médecine utilise ce phénomène sensible où aucune particule de matière ne reste inerte à une projection de spectre lumineux. Aussi un support tel qu'un écran ou un support papier du fait qu'il est constitué de matière interagit, pour une représentation en noir et blanc ou colorée sur certains spectres de couleur visible ou invisible à l'oeil.

Le présent procédé permet de diminuer l'effet polarisant du support en minimisant ses effets de modification d'aspect chromatique visuel par au moins une dimension lumineuse en plus qui tend à redonner la vision d'origine des couleurs et des effets de profondeur.

Le procédé est une addition d'au moins une source lumineuse d'un spectre électro magnétique visible. ou invisible à l'oeil humain. Ce spectre électro magnétique lumineux ayant pour conséquence de modifier la qualité d'impression visuelle perçue de l'image présentée. Ce procédé est au moins un rayonnement lumineux, par exemple, de type de la lumière noire, spectre électromagnétique, dans une zone perpendiculaire, radiale à l'image présentée. Les rayonnements lumineux diffusent en avant et en arrière de la photo ou de l'image. La lumière peut diffuser par le support de l'image.

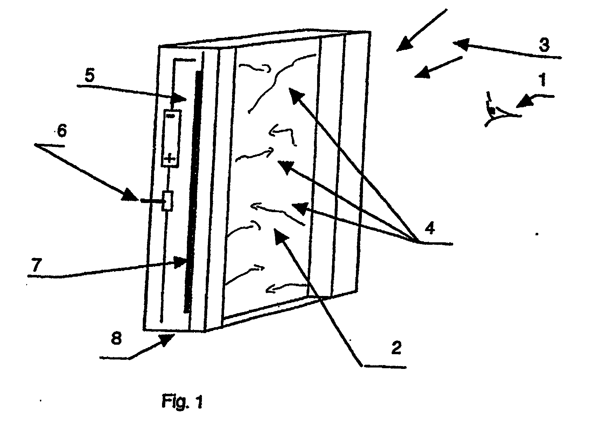

Ce spectre lumineux additionnel permet d'avoir une dynamique lumineuse supplémentaire sur les éléments qui forment l'image représentée. L'image est perçue avec une impression visuelle nouvelle de relief, de profondeur. En effet, la précision colorée par apport de lumière tangentielle rasante en avant et en arrière de l'image permet d'obtenir une impression visuelle très définie par rapport à une lecture habituelle.
Le procédé ( fig.1) a un exemple de réalisation, un appareil qui montre un observateur matérialisé par un oeil (1) qui perçoit une photo (2) sur papier. L'éclairage (3) habituel ambiant est reflété normalement par la photo, où s'ajoute une lumière (4) sur le pourtour de la photo, afin d'avoir une lumière rasante en avant de l'image et dans le support photo, et d'écairer l'arrière de la photo.La lumière doit être équilibrée entre l'avant et l'arrière de la photo. La lumière est émise par au moins une petite lampe (5) tenue dans le support (8), la lampe est cachée de l'observateur. Cette lumière (4) diffuse dans la matière de la photo qui est toujours de fine épaisseur et un peu en arrière, par effleurage, rasant la surface arrière du papier. Cette lumière additionnelle est réglée en intensité par un potentiomètre (6) afin d'ajuster l'équilibre entre la lumière directe ambiante et cette lumière indirecte additionnelle avant et arrière de l'image. Un diffuseur de lumière telle qu'une vitre dépolie ou un polymère (7) peut être installé derrière le papier afin de diffuser la lumière radiale arrière additionnelle. Procédé et appareil utilisables dans le domaine de la photo donnent une profondeur à l'image, proche de l'origine.

## Revendications

1. Procédé donnant à une image recréée sur photo papier (2) une définition de profondeur de l'image d'origine, le procédé comprenant l'éclairage de l'avant de l'image et de l'arrière de la photo par une lumière (4) indirecte additionnée.

2. Le procédé de la revendication 1, dans lequel la lumière indirecte (4) présente un spectre électromagnétique visible à l'oeil humain.

3. Le procédé de la revendication 1 ou 2, dans lequel la lumière indirecte (4) est équilibrée entre l'avant et l'arrière de la photo.

4. Le procédé de la revendication 1, 2 ou 3, dans lequel les rayonnements de la lumière diffusent en avant et en arrière de la photo (2).

5. Le procédé de l'une des revendications 1 à 4, dans lequel la lumière diffuse par le support de la photo (2).

6. Le procédé de l'une des revendications 1 à 5, dans lequel la lumière est tangentielle rasante en avant et en arrière de l'image.

7. Le procédé de l'une des revendications 1 à 6, comprenant en outre l'ajustement de l'équilibre entre la lumière additionnée et la lumière ambiante.

8. Le procédé de l'une des revendications 1 à 7 dans lequel un diffuseur de lumière (7) est installé derrière la photo papier.

9. Un support photo (8) avec au moins une lampe (5) tenue dans le support et cachée de l'observateur(1), dans lequel la lampe ajoute sur le pourtour de la photo papier une lumière indirecte (4) en avant et en arrière de la photo papier (2).

10. Le support de la revendication 9, dans lequel la lumière indirecte (4) présente un spectre électromagnétique visible à l'oeil humain.

11. Le support de la revendication 9 ou 10, dans lequel la lumière indirecte (4) est équilibrée entre l'avant et l'arrière de la photo.

12. Le support de la revendication 9, 10 ou 11, dans lequel la lumière indirecte (4) est rasante en avant de la photo.

13. Le support de l'une des revendications 9 à 12, dans lequel la lumière indirecte (4) est rasante en arrière de la photo.

14. Le support de l'une des revendications 9 à 13, dans lequel la lumière indirecte (4) est réglable en intensité.

15. Le support de l'une des revendications 9 à 14, comprenant en outre un diffuseur de lumière (7) derrière la photo.

## Patentansprüche

1. Verfahren, welches einem auf Fotopapier wiedergegebenen Bild (2) einen Tiefeneindruck des Ausgangsbildes gibt, beinhaltend die Beleuchtung der Vorderseite des Bildes und der Rückseite des Fotos durch ein indirektes Zusatzlicht (4).

2. Verfahren nach Anspruch 1, bei dem das indirekte Licht (4) ein für das menschliche Auge sichtbares elektromagnetisches Spektrum aufweist.

3. Verfahren nach Anspruch 1 oder 2, bei dem das indirekte Licht (4) ausgeglichen ist zwischen der Vorder- und der Rückseite des Fotos.

4. Verfahren nach den Ansprüchen 1, 2 oder 3, in dem sich die Strahlen des Lichts vorderseitig und rückseitig des Fotos (2) ausbreiten.

5. Verfahren nach einem der Ansprüche 1 bis 4, bei dem das Licht sich durch das Trägermaterial des Fotos (2) ausbreitet.

6. Verfahren nach einem der Ansprüche 1 bis 5, bei dem das Licht vorderseitig und rückseitig des Bildes tangential streifend ist.

7. Verfahren nach einem der Ansprüche 1 bis 6, beinhaltend unter anderem eine Einstellung des Gleichgewichts zwischen dem Zusatzlicht und dem Umgebungslicht.

8. Verfahren nach einem der Ansprüche 1 bis 7, in dem ein Lichtdiffusor (7) hinter dem Fotopapier angeordnet ist.

9. Fototräger (8) mit wenigstes einem Leuchtkörper (5), der innerhalb des Trägers gehalten ist und vor dem Beobachter (1) verborgen ist, bei dem der Leuchtkörper auf dem Umfang des Fotopapiers ein indirektes Licht (4) vorderseitig und rückseitig des Fotopapiers (2) hinzufügt.

10. Träger nach Anspruch 9, bei dem das indirekte Licht (4) ein für das menschliche Auge sichtbares elektromagnetisches Spektrum aufweist.

11. Träger nach Anspruch 9 oder 10, bei dem das indirekte Licht (4) ausgeglichen ist zwischen der Vorder- und der Rückseite des Fotos.

12. Träger nach einem der Ansprüche 9, 10 oder 11, bei dem das indirekte Licht (4) vorderseitig des Fotos streifend ist.

13. Träger nach einem der Ansprüche 9 bis 12, bei dem das indirekte Licht (4) rückseitig des Fotos streifend ist.

14. Träger nach einem der Ansprüche 9 bis 13, bei dem das indirekte Licht (4) in der Intensität einstellbar ist.

15. Träger nach einem der Ansprüche 9 bis 14, unter anderem beinhaltend einen Lichtdiffusor (7) hinter dem Foto.

## Claims

1. A method for giving an image recreated on photographic paper (2) a depth definition of the original image, the method comprising illuminating the front of the image and the rear of the photograph with additional indirect light (4).

2. The method of claim 1, in which the indirect light (4) has an electromagnetic spectrum visible to the human eye.

3. The method of claim 1 or 2, in which the indirect light (4) is balanced between the front and back of the photograph.

4. The method of claim 1, 2 or 3, in which the light radiation is diffused at the front and at the back of the photograph (2).

5. The method according to one of Claims 1-4, in which the light diffuses via the carrier for the photograph (2).

6. The method according to one of Claims 1-5, in which the light is grazing tangential light at the front and back of the image.

7. The method according to one of Claims 1-6, further comprising adjusting the balance between the additional light and ambient light.

8. The method according to one of claims 1-7, in which a light diffuser (7) is installed behind the photographic paper.

9. A carrier for a photograph (8) with at least one lamp (5) retained in the carrier and hidden from the observer (1), in which the lamp adds to the outer border of the photographic paper indirect light (4) forward and backward of the photographic paper (2).

10. The carrier according to claim 9, in which the indirect light (4) has an electromagnetic spectrum visible to the human eye.

11. The carrier of claim 9 or 10, in which the indirect light (4) is balanced between the front and back of the photograph.

12. The carrier of claim 9, 10 or 11, in which the indirect light (4) is grazing light at the front of the photograph.

13. The carrier of one of claims 9 to 12, in which the indirect light (4) is grazing light at the back of the photograph.

14. The carrier of one of Claims 9 to 13, in which the indirect light (4) is adjustable in intensity.

15. The carrier of one of Claims 9-14, further comprising a light diffuser (7) behind the photograph.
